# EUROPEAN PATENT SPECIFICATION

(11) **EP 2 056 680 B1**
(45) Date of publication and mention of the grant of the patent: **21.11.2012**
(21) Application number: 07841527.0
(22) Date of filing: 29.08.2007
(51) Int. Cl.: A23G 4/08, A23G 3/50, A23G 9/44, A23G 4/06

(54) **INDULGENT GUM BASE AND CHEWING GUM COMPOSITIONS CONTAINING SAME**
VERZEHRBARE GUMMIBASE UND KAUGUMMIZUSAMMENSETZUNG ENTHALTEND DIESELBE
BASE DE GOMME DOUCE ET COMPOSITIONS DE CHEWING-GUM CONTENANT CELLE-CI

(30) Priority: 29.08.2006 US 840905 P
(43) Date of publication of application: 13.05.2009
(73) Proprietor: Kraft Foods Global Brands LLC, Northfield, IL 60093 (US)
(72) Inventor: LUO, Shiuh, Livingston, NJ 07039 (US); VISSCHER, Glenn, Morris Plains, NJ 07950 (US); McCORMICK, Demetrius, Torino, Belle Mead, NJ 08502 (US)
(74) Representative: Wilson Gunn
(86) International application number: PCT/US2007/077088
(87) International publication number: WO 2008/027952

(56) References cited:
- US-A- 4 352 822
- US-A- 4 752 481
- US-A- 4 889 727
- US-A- 4 915 958
- US-A- 5 023 093
- US-A- 5 286 500
- US-A- 5 800 848
- US-A1- 2003 039 720
- US-A1- 2003 198 710
- US-A1- 2006 045 934
- G. RIVAROLA, J.A. SEGURA, M.C. ANON, A. CALVELO: "CRYSTALLIZATION OF HYDROGENATED SUNFLOWER-COTTONSEED OIL" JAOCS JOURNAL OF THE AMERICAN OIL CHEMISTS' SOCIETY, [Online] vol. 64, no. 11, November 1987 (1987-11), pages 1537-1542, XP002538429 Retrieved from the Internet: URL:http://www.springerlink.com/content/mg 41g83w77688448/fulltext.pdf> [retrieved on 2009-07-22]
- ENTISAR A. EL-DIFRAWI, A.A. ISMAIL: "The stability, thermal dilatation and solidification properties of partially hydrogenated cottonseed oil emulsion in skim milk" INTERNATIONAL JOURNAL OF FOOD SCIENCE AND TECHNOLOGY, [Online] vol. 14, 1979, pages 41-48, XP002538430 Retrieved from the Internet: URL:http://www3.interscience.wiley.com/cgi -bin/fulltext/120057970/PDFSTART> [retrieved on 2009-07-22]
- ANONYMOUS: "Hydrogenated soybean oil" CHEMICAL LAND21.COM, [Online] 18 March 2006 (2006-03-18), pages 1-1, XP002538431 Retrieved from the Internet: URL:http://web.archive.org/web/20060318022 708/http://www.chemicalland21.com/lifescie nce/foco/HYDROGENATED+SOYBEAN+OIL.htm> [retrieved on 2009-07-22]

## Description

### FIELD

The present invention includes gum base compositions for use in chewing gum products and chewing gum compositions containing same. The gum base compositions and/or chewing gum compositions may provide a creamy and/or juicy perception upon consumption. In particular, the gum base compositions and/or chewing gum compositions include an elastomer, a gum resin or ester thereof and a low melting pointing fat.

### BACKGROUND

Gum base generally is the insoluble portion of a chewing gum product, which binds all of the ingredients together. It is used as a support for the edible and soluble portion of a chewing gum product, which includes flavours and sweeteners or the like. Traditional gum base includes elastomers or rubbers, among other ingredients, such as resins, plasticizers, fillers, waxes and softeners, which may be added to improve the texture of the base. Gum base typically is used in amounts of about 25% by weight of the total chewing gum product.

Gum base typically does not provide any sensory attributes of its own upon mastication. Although flavors or active substances may be included in traditional chewing gums to provide different tastes or chemical sensations, such as cooling, the gum base itself typically does not impart any perceptible sensation.

US5800848 aims to provide a chewing gum comprising an improved softener (a sucrose polyester) which is generally said to give improved texture, shelf life and flavour quality.

US 5286500 aims to provide a chewing gum base which is wax-free, but which has flavour release characteristics which are at least as good as similar gum bases including wax.

US 5023093 is primarily concerned with providing a reduced calorie chewing gum base composition having an extended flavour release without formation of a rubbery or tight chew.

US 4352822 aims to provide a non-styrene butadiene rubber gum base having non-stick properties, and which retains its softness and improves or extends sweetness or flavour.

US 2006/045934 aims to provide a multi-layer liquid-filled gum which is able to maintain its liquidity, i.e. where the liquid in the centre-fill does not migrate from the centre to the surrounding gum layer.

US 2003/039720 aims to provide an edible chewing gum which is substantially gluten-free and which uses agar, and which can give a cohesive chew.

US 4889727 discloses a method of enhancing the flavour of synthetic chewing gum base by adding a minor amount of cocoa powder to the base itself or to the chewing gum in which the base is used.

US 4915958 discloses a chewing gum composition which exhibits extended flavour release and an improved chewing sensation, the composition being prepared with a high base content.

However, none of these disclosures addresses imparting a creamy and/or juicy perception upon a chewing gum.

It often is desirable, however, for chewing gum products to provide an indulgent perception during mastication. In today's health conscious society, edible products that satisfy certain indulgent cravings yet are low-calorie or low-fat are in high demand. Confectioneries, such as chocolates or caramels, may satisfy such cravings, yet these products may be highly caloric and high in fat content. As such, many individuals search for a snack replacement to such candies, yet one that still satisfies their indulgent cravings. Although creamy flavors, such as chocolate, have been added to conventional chewing gum base, the resulting chewing gum products have not provided a creamy or indulgent mouthfeel, and moreover, tend to crumble and fall apart during mastication.

There is a need, therefore, for a gum base and chewing gum products that impart a creamy and/or juicy perception during mastication. Such gum base and chewing gum products may provide a lower calorie alternative to traditional, indulgent confectioneries.

### SUMMARY

The invention is as defined by the appended claims.

In some embodiments there is a chewing gum composition including: a gum base composition which includes at least one elastomer, at least one gum resin or ester thereof present in amounts of at least 10% by weight of the gum base composition and at least one fat having a melting point from 15°C to 60°C present in amounts of 20% to 50% by weight of the gum base composition; at least one flavor; and at least one sweetener.

Some embodiments provide a chewing gum composition including: a gum base composition which includes at least one elastomer, at least one gum resin or ester thereof present in amounts of at least 10% by weight of the gum base composition and at least one fat having a melting point from 15°C to 60°C; at least one flavor; and at least one sweetener, wherein the gum base composition is present in amounts of 60 % to 90% by weight of the chewing gum composition.

In some embodiments there is provided a chewing gum composition including: at least one elastomer containing one or more polar groups; at least one gum resin or ester thereof present in amounts of at least 10% by weight of the composition; at least one fat having a melting point from 15°C to 60°C, the at least one fat including a hydrogenated oil; polyvinyl acetate having a molecular weight of 10,000 g/mol to 60,000 g/mol; at least one flavor; and at least one sweetener present in amounts of less than 25% by weight of the composition.

In some embodiments there is a chewing gum composition including: at least one elastomer; at least one gum resin or ester thereof; and at least one fat having a melting point from 15°C to 60°C, wherein upon mastication for a period of at least 5 minutes, the chewing gum composition contains sufficient fat to provide a velvety chew score of at least 2.0 on a scale of 0 to 4 as measured by descriptive analysis and a surface smoothness score of at least 2.0 on a scale of 0 to 4 as measured by descriptive analysis.

Some embodiments provide a method of preparing a chewing gum composition containing sufficient fat to provide a velvety chew score of at least 2.0 on a scale of 0 to 4 as measured by descriptive analysis and a surface smoothness score of at least about 2.0 on a scale of 0 to 4 as measured by descriptive analysis, including the steps of:
(a) providing a gum base composition including:
   (i) at least one elastomer containing one or more polar groups;
   (ii) at least one gum resin or ester thereof; and
   (iii) at least one fat having a melting point from about 15°C to about 60°C,
   wherein the gum base composition is present in amounts of 60% to 90% by weight of the chewing gum composition; and
(b) admixing the gum base composition with at least one flavor and at least one sweetener

Some embodiments provide a continuous gum making process including the steps of: forming a blend of at least one elastomer containing one or more polar groups, at least one resin or resin ester and at least one fat having a melting point of 15°C to 60°C; admixing the blend in-line with at least one flavor and at least one sweetener; and forming a chewing gum shape from the blend.

In some embodiments, there is a method of producing a chewing gum experience having a creamy organoleptic perception including the steps of:
(a) providing a chewing gum composition containing a chewing gum base and at least one flavor, the chewing gum base including a blend of:
   (i) at least one elastomer containing one or more polar groups;
   (ii) at least one gum resin or ester thereof; and
   (iii) at least one fat having a melting point from 15°C to 60°C,
   wherein the chewing gum base is present in amounts of 60 % to 90% by weight of the chewing gum composition; and
(b) chewing the chewing gum composition for a period of at least 5 minutes to experience a creamy perception defined by a velvety chew score of at least 2.0 on a scale of 0 to 4 as measured by descriptive analysis and a surface smoothness score of at least 2.0 on a scale of 0 to 4 as measured by descriptive analysis.

In some embodiments there is provided a method of producing a chewing gum experience having a juicy organoleptic perception including the steps of:
(a) providing a chewing gum composition containing a chewing gum base and at least one flavor, the chewing gum base including a blend of:
   (i) at least one elastomer containing one or more polar groups;
   (ii) at least one gum resin or ester thereof; and
   (iii) at least one fat having a melting point from 15°C to 60°C,
   wherein the chewing gum base is present in amounts of 75% to 90% by weight of the chewing gum composition; and
(b) chewing the chewing gum composition for a period of at least 5 minutes to experience a juicy perception defined by a moistness of bolus score of at least 2.0 on a scale of 0 to 4 as measured by descriptive analysis.

### DETAILED DESCRIPTION

As used herein the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum compositions.

As used herein, the term "ingredient" and the term "component" are used interchangeably to describe any additive, fixing, substance, material, agent, active, element, or part that may be included in the gum compositions of some embodiments.

Embodiments described herein provide gum base compositions and/or chewing gum compositions that impart a creamy and/or juicy perception upon consumption. The gum base and/or chewing gum compositions may include at least one low melting point fat. The low melting point fat may provide lubricity to the gum base and/or chewing gum compositions, thereby enhancing the surface smoothness of chewing gum products into which the gum base compositions are incorporated, as well as the ease of chew of such products. In some embodiments, little or none of the low melting point fat may be released from the gum base and/or chewing gum compositions during mastication, which may allow the compositions to retain cohesive integrity. Yet, the compositions still may impart a perceptible velvetiness upon consumption due, at least in part, to the presence of the low melting point fat. In some other embodiments, a portion of the low melting point fat may be released from the gum base and/or chewing gum compositions during consumption, yet a sufficient amount of the low melting point fat may be retained in the gum base and/or chewing gum compositions during consumption to maintain the cohesive integrity thereof.

### Gum Base and/or Chewing Gum Compositions

Embodiments described herein provide gum base and/or chewing gum compositions that impart a perception of indulgence upon consumption. More specifically, as described above, the gum base and/or chewing gum compositions impart a creamy and/or juicy perception upon consumption while also retaining cohesive integrity. The gum base and/or chewing gum compositions may include at least one elastomer, desirably having one or more polar groups, at least one elastomer solvent, such as a gum resin or ester thereof, and at least one low melting point fat. The gum base and/or chewing gum compositions may be incorporated into a variety of different chewing gum products to provide chewing gums that impart a creamy and/or juicy perception upon consumption.

By the term "cohesive integrity," it is meant that the gum base and/or chewing gum holds together as a mass throughout mastication of the chewing gum product into which it is incorporated More specifically, the gum base and/or chewing gum desirably does not crumble or break apart and become discontinuous during mastication.

The terms "velvety," "velvetiness," "creaminess" or "creamy perception" refer to the texture attributes, i.e., mouthfeel, provided by the gum base and/or chewing gum compositions and perceived in the mouth upon mastication of the chewing gum. Like taste and chemical attributes, texture is perceived by sensors in the mouth. Texture is the sensory manifestation of a product based on: (1) the product's reaction to stress, which is measured as mechanical properties by the kinesthetic sense in the muscles of the tongue, jaw, teeth or lips; and (2) the product's tactile feel properties, which are measured as geometrical particles or moisture properties by the tactile nerves in the lips, tongue, or other areas of the oral cavity including, but not limited to the soft palate, hard palate, etc.

Texture attributes can be reliably and reproducibly measured using sensory analysis methods known as descriptive analysis techniques. The Spectrum^{™} method of descriptive analysis is described in MORTEN MEILGAARD, D.SC. ET AL., SENSORY EVALUATION TECHNIQUES (3d ed. 1999). The Spectrum^{™} method is a custom design approach meaning that the highly trained panelists who generate the data also develop the terminology to measure the attributes of interest. Further, the method uses intensity scales created to capture the intensity differences being investigated. These intensity scales are anchored to a set of well-chosen references. Using these references helps make the data universally understandable and usable over time. This ability to reproduce the results at another time and with another panel makes the data potentially more valuable than analytical techniques which offer similar reproducibility but lack the ability to fully capture the integrated sensory experiences as perceived by humans.

Sensory methods such as descriptive analysis can be conducted on a screening basis or on a full panel basis. When testing is done on a screening basis, there may be fewer panelists and those panelists may use an abbreviated scale such as a 5 point scale for rating the products. When testing is done on a full panel basis, more panelists may be involved and a complete scale such as a 15 point scale may be used. When choosing whether to use a screening or full panel basis for the testing, sensory scientists consider a range of variables such as cost, time, number of samples, etc. A screening basis may be used when time for generating the data is limited and/or when data from an abbreviated scale will adequately distinguish die samples.

For chewing gums, texture attributes such as "velvety chew," "surface smoothness," "ease to chew," and "wall integrity," have been developed by descriptive analysis panels based on common descriptors used by the panelists to describe their experiences with chewing gums. Velvety chew is an integrated term that describes the playability or moveability in the mouth. It encompasses how the chewing gum bolus feels in the mouth as it moves around the teeth and gums as well as the fullness of body and how the bolus holds together. Once a trained panel agrees on a term like velvety chew, they can reliably measure that texture attribute and distinguish chewing gums having varying degrees of that attribute.

The first assessment of texture noted above, i.e., the product's reaction to stress, relates to the mechanical properties of the product. Mechanical properties include the hardness and cohesiveness of the product. With regard to such mechanical properties of texture, the gum base and/or chewing gum compositions described herein may maintain cohesive integrity, as provided above. In particular, in some embodiments, the gum base and/or chewing gum mass, or bolus, sticks firmly together during mastication, rather than becoming too thin or stringy for an individual to press their tongue through the gum bolus. The gum base and/or chewing gum also may provide playability or ease of chew, i.e., not so hard or tough that an individual cannot deform the bolus during mastication, yet not so soft that the bolus becomes mushy. This property also may be referred to as fullness or body.

The second measure of texture noted above relates to the tactile feel properties of the product. Tactile feel properties include the smoothness, moistness, slipperiness and body of the product. As regards such tactile feel properties, the gum base and/or chewing gum compositions described herein may be perceived as full bodied, moist, slippery and smooth. In particular, the gum base and/or chewing gum bolus itself may be perceived as moist or watery during mastication. A slippery feeling also may be perceived, i.e., the composition may slide or glide across the tongue. Surface smoothness also may be perceived, which means that the bolus is soft, smooth and slick rather than hard and waxy with rigid tooth impressions. In addition, surface smoothness means that particles are not perceived in the gum base and/or chewing gum composition by an individual during mastication. After mastication, an individual may perceive a film remaining on mouth surfaces, which is referred to as a slick mouthcoating.

The combination of the mechanical and tactile feel textural attributes described above is referred to herein as "velvety," "velvetiness," "creaminess" or a "creamy perception." Such perception lends indulgence to the gum base and/or chewing gum compositions and chewing gum products in which they are employed. Accordingly, the gum base compositions and chewing gum compositions of some embodiments may provide the individual user with a means to feel their decadent inclinations are satisfied without the caloric content of some conventionally decadent foods.

In accordance therewith, in some embodiments the gum base composition, or chewing gum composition, imparts a creamy perception upon mastication for a period of at least about 5 minutes, defined by a velvety chew score of at least 2.0 on a scale of 0 to 4 as measured by descriptive analysis and a surface smoothness score of at least 2.0 on a scale of 0 to 4 as measured by descriptive analysis. Further, the gum base composition, or chewing gum composition, may retain cohesive integrity as measured by a wall integrity score of at least 1.5 on a scale of 0 to 3 as measured by descriptive analysis. The gum base composition, or chewing gum composition, also may provide a score of at least 2.0 on a scale of 0 to 4 as measured by descriptive analysis for one or more of the following criteria: mouth film; moistness of bolus; and ease to chew.

The gum base compositions also may import a perception of juiciness upon consumption. Specifically, in some embodiments, the gum base composition, or chewing gum composition, imparts a juicy perception upon mastication for a period of at least 5 minutes, defined by a moistness of bolus score of at least 2.0 on a scale of 0 to 3 as measured by descriptive analysis.

The elastomer employed in the gum base and/or chewing gum compositions may be any water-insoluble polymer known in the art, and includes those gum polymers utilized for chewing gums and bubble gums. In some embodiments, the elastomer component of the gum base and/or chewing gum compositions may help to maintain the integrity of the gum base and/or chewing gum composition when combined with the at least one low melting point fat. For instance, elastomers having one or more polar groups may be employed to help maintain the cohesive integrity of the gum base and/or chewing gum compositions during consumption. An example of a suitable polar elastomer includes, but is not limited to, styrene butadiene rubber.

In some embodiments, relatively non-polar elastomers also may be included in the gum base and/or chewing gum compositions in combination with the polar elastomers. Suitable non-polar elastomers include, but are not limited to, butyl rubber, polyisobutylene and combinations thereof.

In some embodiments, the polar and/or non-polar elastomers used in the gum base and/or chewing gum may have a high molecular weight. High molecular weight elastomers enhance the integrity of the gum bolus.

Other conventional polymers for use in gum bases and/or chewing gums also may be employed. Illustrative examples of suitable polymers in gum bases and/or chewing gums include both natural and synthetic elastomers. For example, those polymers which are suitable in gum base and/or chewing gum compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, polyvinyl acetate and the like, and mixtures thereof. Copolymers include alternating copolymers, periodic copolymers, random copolymers, statistical copolymers, block copolymers and combinations thereof.

Styrene-diene block copolymers, such as a styrene-butadiene block copolymer, may be employed in some embodiments. Such block copolymers have two or more hard segments of polystyrene and at least one soft segment of a polydiene, such as, but not limited to, a polybutadiene or polyisoprene. Blends with other elastomers, such as styrene-diene random copolymers, also are contemplated. Styrene-butadiene block copolymers may have a molecular weight of 100,000 g/mol to 300,000 g/mol, or higher.

In some embodiments, the elastomer may be a styrene-isoprene-styrene block copolymer. Such copolymers include polystyrene segments at each end of the polymer chain and an isoprene segment in between. Styrene-isoprene-styrene block copolymers may have a molecular weight of 50,000 g/mol to 1,000,000 g/mol.

The at least one elastomer may be employed in the gum base and/or chewing gum composition in amounts from 5% to 60%, and more specifically from 20% to 40%, by weight of the gum base and/or chewing gum composition.

The gum base and/or chewing gum compositions also may include at least one gum resin (rosin) or ester thereof. Gum resins or esters thereof may function as elastomer solvents or plasticizers, which may aid in softening the elastomer component. Such gum resins or esters thereof may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of gum resins or esters thereof suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof.

In some embodiments, the at least one gum resin or ester thereof may have an intermediate molecular weight of 100g/mol to 1000g/mol. The at least one gum resin or ester thereof may be employed in the gum base and/or chewing gum composition in amounts from 4% to 40%, and more specifically from 10% to 30%, and even more specifically 15% to 25%, by weight of the gum base and/or chewing gum composition. Some embodiments include at least 10° of the gum resin or ester thereof by weight of the gum base and/or chewing gum composition.

The gum base and/or chewing gum compositions also may include at least one low melting point fat. In particular, in some embodiments, the fat may have a melting point of 15°C to 60°C, more specifically 15°C to 40°C, and even more specifically 30°C to 40°C. Low melting point fats may provide lubricity, thereby enhancing the surface smoothness and ease of chew of chewing gum products into which the gum base under chewing gum compositions are incorporated. In some embodiments, low melting point fats may replace softeners, which are traditionally incorporated into gum base and or chewing gum compositions to soften the compositions. In addition, in some embodiments, a portion of the low melting point fat may release from the gum base and/or chewing gum composition during consumption, yet a sufficient amount of the low melting point fat may remain in the gum base and/or chewing gum composition to retain the cohesive integrity thereof. As discussed above, sufficient low melting point fat may be present, upon mastication for a period of at least 5 minutes, to provide a velvety chew score of at least 2.0 on a scale of 0 to 4 as measured by descriptive analysis and a surface smoothness score of at least 2.0 on a scale of 0 to 4 as measured by descriptive analysis. In addition, sufficient low melting point fat may be present to retain cohesive integrity, as measured by a wall integrity score of at least 1.5 on a scale of 0 to 3 as measured by descriptive analysis. Examples of suitable fats having a melting point of 15°C to 60°C include, but are not limited to, hydrogenated oils, such as hydrogenated palm oil, hydrogenated or palm kernel oil, hydrogenated cottonseed oil, cocoa fat, soy bean oil, peanut oil, cotton seed oil, sun flower seed oil, olive oil, and the like and combinations thereof.

Low melting point fats are employed in the gum base in amounts from 20% to about 50%, and even more specifically from 15% to 35%, by weight of the gum base and/or chewing gum composition.

Low melting ponit fats may also be employed in the chewing gum composition.

In some embodiments, a combination of a low melting point fat and a flavor may be used to add softness to the compositions. Flavors also tend to enhance the velvety perception of compositions into which they are incorporated.

In some embodiments, the gum base and/or chewing gum compositions also may include polyvinyl acetate. Polyvinyl acetate, particularly high molecular weight polyvinyl acetate, may serve as a textural and bulking agent and may assist in maintaining the integrity of the gum base composition during consumption. Polyvinyl acetates having a molecular weight range of 10,000 g/mol to 60,000 g/mol may be used in some embodiments. This may include combinations of polyvinyl acetates having different molecular weights, such as, for instance, combinations of low molecular weight polyvinyl acetates and high molecular weight polyvinyl acetates. Low molecular weight polyinyl acetates useful in some embodiments may have a molecular weight of 10,000 g/mol to 15,000 g/mol. Medium molecular weight polyvinyl acetates useful in some embodiments may have a molecular weight of 15,000 g/mol to 55,000 g/mol. High molecular weight polyvinyl acetates useful in some embodiments may have a molecular weight of 50,000 g/mol to 100,000 g/mol, more specifically 80,000 g/mol to 100,000 g/mol. Ultra-high molecular weight polyvinyl acetates may have a molecular weight of 100,000 g/mol or higher. Polyvinyl acetate may be employed in the gum base and/or chewing gum composition in amounts from 0% to 50%, and more specifically from 10% to 35%, by weight of the gum base and/or chewing gum composition.

In addition to the components set out above, the gum base and/or chewing gum compositions may include any component known in the chewing gum art. Such components may be water soluble, water-insoluble or a combination thereof. For example, the gum base and/or chewing gum may include bulking agents, waxes, emulsifiers, plasticizers, fillers and mixtures thereof.

In some embodiments, the gum base and/or chewing gum compositions may include wax. Wax may soften the polymeric elastomer mixture and improve the elasticity of the gum base and/or chewing gum compositions. When present, the waxes employed may have a melting point below 60°C, and desirably between 45°C and 55°C. The low melting wax may be a paraffin wax. The wax may be present in the gum base and/or chewing gum composition in an amount from 6% to 10%, and more specifically from 7% to 9.5%, by weight of the gum base and/or chewing gum composition.

In addition to the low melting point waxes, waxes having a higher melting point may be used in the gum base and/or chewing gum compositions in amounts up to 5%, by weight of the gum base and/or chewing gum composition. Such high melting waxes include beeswax, vegetable wax, candelilla wax, carnuba wax, most petroleum waxes, and the like, and mixtures thereof.

The gum base and/or chewing gum compositions also may include emulsifiers, which may aid in dispersing the immiscible components into a single stable system. The emulsifiers useful in some embodiments include glyceryl monostearate, lecithin, fatty acid monoglycerides, diglycerides, propylene glycol monostearate, and the like, and mixtures thereof. The emulsifier may be employed in amounts from 2% to 15%, and more specifically, from 7% to 11%, by weight of the gum base and/or chewing gum composition.

The gum base and/or chewing gum compositions also may include plasticizers or softeners to provide a variety of desirable textures and consistency properties. Because of the low molecular weight of these ingredients, the plasticizers and softeners are able to penetrate the fundamental structure of the gum base and/or chewing gum making it plastic and less viscous. Useful plasticizers and softeners include lanolin, palmitic acid, oleic acid, stearic acid, sodium stearate, potassium stearate, glycery-1 triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base and/or chewing gum compositions. The plasticizers and softeners are generally employed in the gum base and/or chewing gum compositions in amounts up to 20% by weight of the gum base and/or chewing gum composition, and more specifically in amounts from 9% to 17%, by weight of the gum base and/or chewing gum composition.

Plasticizers also include hydrogenated vegetable oils, such as soybean oil and cottonseed oils, which may be employed alone or in combination. These plasticizers may provide the gum base and/or chewing gum compositions with good texture and soft chew characteristics. These plasticizers and softeners generally may be employed in amounts from 5% to 14%, and more specifically in amounts from 5% to 13.5%, by weight of the gum base and/or chewing gum composition.

Anhydrous glycerin may also be employed as a softening agent, such as the commercially available United States Pharmacopeia (USP) grade. Glycerin is a syrupy liquid with a sweet warm taste and has a sweetness of 60% of that of cane sugar. Because glycerin is hygroscopic, the anhydrous glycerin may be maintained under anhydrous conditions throughout the preparation of the gum base and/or chewing gum composition.

In some embodiments, the gum base and/or chewing gum compositions also may include effective amounts of bulking agents, such as mineral adjuvants, which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base and/or chewing gum compositions in various amounts. Preferably the amount of filler, when used, will be present in an amount from 15% to 40%, and desirably from 20% to 30%, by weight of the gum base and/or chewing gum composition. Higher ranges of filler could be used in some embodiments, such as 30% to 75% by weight of the gum base and/or chewing gum composition.

A variety of traditional ingredients may be optionally included in the gum base and/or chewing gum compositions in effective amounts such as flavor agents and coloring agents, antioxidants, preservatives, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, vitamin E and mixtures thereof, may also be included. Other conventional chewing gum additives known to one having ordinary skill in the chewing gum art may also be used in the gum base and/or chewing gum compositions.

### Chewing Gum Products

The gum base and/or chewing gum compositions described above may be incorporated into a variety of different chewing gum products, which may provide a perceptible creaminess upon consumption. For instance, chewing gum products may be prepared in forms, such as, slabs, sticks, pellets, pillows, deposited, compressed gums, center-fill gums, and the like.

The gum base composition, or the chewing gum composition itself, may include at least one elastomer, at least one gum resin or ester thereof and at least one fat having a melting point of 15°C to 60°C, as described above. The gum base and/or chewing gum composition also may include any of the additional components set out above. In some embodiments, chewing gum compositions may include the gum base composition, as described above, at least one flavor and at least one sweetener.

In some embodiments, the gum base composition may be employed in chewing gum compositions in amounts from 5% to 95%, more specifically from 75% to 95%, and even more specifically from 75% to 90%, by weight of the chewing gum composition.

The low melting point fat may be employed in the chewing gum composition in amounts from 5% to 40%, more specifically from 25% to 35%, and even more specifically from 30% to 35%, by weight of the chewing gum composition.

In some embodiments, in addition to the portion of the low melting point fat being included in the gum base composition, a portion of the low melting point fat may be included in the chewing gum composition portion of the total product.

In some embodiments, a portion of the low melting point fat may be included in a separate layer in the chewing gum composition rather than all in the gum base composition. In particular, the gum base composition may include a first portion of the low melting point fat and a separate fat layer may include a second portion of the low melting point fat. Upon consumption, the separate fat layer may combine with the gum base bolus. In some embodiments, for instance, the low melting point fat may be included in a layer of fat on the surface of the gum base. In some other embodiments, the low melting point fat may be included in a coating layer, which at least partially surrounds the chewing gum, such as a chocolate coating.

In addition, the chewing gum compositions also may include at least one flavor (flavorings or flavor agents). Examples of suitable flavors may include those flavors known to the skilled artisan, such as natural and artificial flavors. These flavorings may be chosen from synthetic flavor oils and favoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almond, and cassia oil. Also useful flavorings are artificial, natural and synthetic fruit flavors such as vanilla, and citrus oils including lemon, orange, time, grapefruit, yazu, sudachi, and fruit essences including apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, an oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the at least one flavor employed in the chewing gum compositions may be selected from those associated with an indulgent flavor. As used herein, "indulgent flavor" refers to a type of flavor associated with a creamy or decadent taste. Sometimes these flavors are referred to as "sweet/brown" in the art. Examples of suitable indulgent flavors include, but are not limited to, maple, cola, chocolate, dulce de leche, raisin, vanilla, caramel, dairy flavors, such as cream, butter, milk and yogurt, butterscotch, peanut butter, fruit cream flavors, such as strawberry cream, and combinations thereof. In some embodiments, the chewing gum compositions could be flavored with a fat-confining flavor, such as, but not limited to, chocolate, chocolate crumb, nut butters, dairy-based creams and the like.

In some embodiments, the flavor may be employed in either liquid form and/or dried form. When employed in the latter form, suitable drying means such as spray drying the oil may be used. Alternatively, the flavor may be absorbed onto water soluble materials, such as cellulose, starch, sugar, maltodextrin, gum arabic and so forth or may be encapsulated. The actual techniques for preparing such dried forms are well-known.

Alternatively, the flavor may be used in an emulsion in some embodiments. For instance, the flavor may be pre-mixed as an emulsion with the low melting point fat. Such flavor emulsions may extend the release of the flavor during consumption.

In some embodiments, the flavor may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof. In some embodiments, a single flavor may be used in its encapsulated form in combination with its unencapsulated, or free, form. In some other embodiments, multiple flavors may be used, some of which may be encapsulated and others which may be unencapsulated.

Typically, encapsulation of a flavor will result in a delay in the release of the predominant amount of the flavor during consumption of a chewing gum composition that includes the encapsulated flavor (e.g., as part of a delivery system added as a component to the chewing gum composition). In some embodiments, the release profile of the flavour can be managed by managing various characteristics of the flavor, delivery system containing the flavor, and/or the chewing gum composition containing the delivery system and/or how the delivery system is made. For example, characteristics might include one or more of the following: tensile strength of the delivery system, water solubility of the ingredient, water solubility of the encapsulating material, water solubility of the delivery system, ratio of flavor to encapsulating material in the delivery system, average or maximum particle size of the flavor, average or maximum particle size of ground delivery system, the amount of the flavor or the delivery system in the chewing gum composition, ratio of different polymers used to encapsulate one or more flavors, hydrophobicity of one or more polymers used to encapsulate one or more flavors, hydrophobicity of the delivery system, the type or amount of coating on the delivery system, the type or amount of coating on a flavor prior to the flavor being encapsulated, among others.

The amount of flavor employed herein may be a matter of preference subject to such factors as the individual flavor and the strength of flavor desired. Thus, the amount of flavoring may be varied in order to obtain the result desired in the final product. In general, the flavors are present in amounts of 1% to 10%, and more specifically from 2% to 6%, and even more specifically, from 3% to 5%, by weight of the chewing gum composition.

In some embodiments, the chewing gum compositions also may include at least one sweetener. Suitable sweeteners (sweetening agents) may be natural, artificial or synthetic sweeteners, including bulk sweeteners such as sugars, sugarless bulk sweeteners, or the like, or mixtures thereof.

Suitable sugar sweeteners for use in the core and/or coating generally include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids and mixtures thereof.

Suitable sugarless bulk sweeteners for use in the core and/or coating include sugar alcohols (or polyols) such as, but not limited to, sorbitol, xylitol, mannitol, galactitol, maltitol, hydrogenated isomaltulose (isomalt), lactitol, erythritol, hydrogenated starch hydrolysate, stevia, lo han quo, and mixtures thereof.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{®}, a commercially available product manufactured by Roquette Freres of France, and HYSTAR^{®}, a commercially available product manufactured by SPI Pools, Inc. of New Castle, Delaware, are also useful.

In general, the sweeteners are present in amounts of 5% to 20%, and more specifically from 5% to 15%, and even more specifically, from 5 % to 10%, by weight of the chewing gum composition. Some embodiments include less than 25% sweetener by weight of the chewing gum composition.

In some embodiments, high-intensity sweeteners may be used. Without being limited to particular sweeteners, representative categories and examples include:
(a) water-soluble sweetening agents such as dihydrochalcones, monellin, stevia steviosides, rebaudioside A, glycyrrhizin, dihydroflavenol, and sugar alcohols such as sorbitol, mannitol, maltitol, and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalaclo-sucrose; and 4,6,1',6'-tetradeoxy-sucrose, and mixtures thereof;
(e) protein based sweeteners such as thaumaoccous danielli (Thaumatin I and II) and talin;
(f) the sweetener monatin (2-hydroxy-2-(indol-3-ylmethyl)-4-aminoglutaric acid) and its derivatives; and
(g) the sweetener Lo han guo (sometimes also referred to as "Lo han kuo" or "Lo han quo").

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated formes, and mixtures thereof.

In general, an effective amount of intense sweetener may be utilized to provide the level of sweetness desired, and this amount may vary with the sweetener selected. The intense sweetener may be present in amounts from 0.001% to 3%, by weight of the product, depending upon the sweetener or combination of sweeteners used.

Similar to the description of flavors provided above, any of the sweeteners may be used in their encapsulated and/or unencapsulated forms. Multiple sweeteners also may be employed, which may be encapsulated and/or unencapsulated. Encapsulation typically will result in a delay in the release of the predominant amount of the sweetener during consumption of a chewing gum composition that includes the encapsulated sweetener. Also as discussed above with regard to flavors, the release profile of the sweetener can be managed by managing various characteristics of the sweetener, delivery system containing the sweetener, and/or the chewing gum composition containing the delivery system and/or how the delivery system is made.

In some embodiments, the at least one sweetener may be added to the chewing gum composition as a solid. For instance, powdered or crystalline sweeteners, such as powdered or crystalline sorbitol, may be employed in some embodiments.

The chewing gum compositions also may include a variety of optional components, For instance, in some embodiments, the chewing gum compositions may include mounts of conventional additives selected from the group consisting of plasticizers, softeners, emulsifiers, waxes, fillers, bulking agents (carriers, extenders, bulk sweeteners), mineral adjuvants, coloring agents, antioxidants, acidulants, thickeners, medicaments, oral care actives, such as remineralization agents, antimicrobials and tooth whitening agents, as described in assignee's co-pending U.S. Patent Application No. 10/901,511, filed on July 29, 2004 and entitled "Tooth Whitening Compositions and Delivery Systems Therefor," and the like, and mixtures thereof. Some of these additivies may serve more than one purpose. For example, in sugarless gum compositions, a sweetener, such as maltitol or other sugar alcohol, may also function as a bulking agent.

Coloring agents may be used in amounts effective to produce the desired color. The coloring agents may include pigments which may be incorporated in amounts up to about 6%, by weight of the composition. For example, titanium dioxide may be incorporated in amounts up to about 2%, and preferably less than about 1% by weight of the composition. The colorants may also include natural food colors and dyes suitable for food, drug and cosmetic applications. These colorants are known as F.D. & C. Dyes and lakes. The materials acceptable for the foregoing uses are preferably water-soluble. Illustrative nonlimiting examples include the indigoid dye known as F.D. & C. Blue No. 2, which is the disodium salt of 5,5-indigotindisulfonic acid. Similarly, the dye known as F.D. & C. Green No. I comprises a triphenylmethane dye and is the monosodium salt of 4-[4-(N-ethyl-p-sulfoniumbenzylamino) diphenylmethylene]-(1-N-ethyl -N-p-sulfoniumbenzyl)-delta-2,5-cyclohexadieneimine]. A full recitation of all F.D. & C. Colorants and their corresponding chemical structures may be found in the Kirk-Othmer Encyclopedia of Chemical Technology, 3rd Edition, in volume 5 at pages 857-884.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatine, carbon, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants.

A variety of additional components optionally may be included in the chewing gum compositions, such as, but not limited to, physiological cooling agents, throat-soothing agents, spices, warming agents, tingling agents, tooth-whitening agents, breath-freshening agents, dental care agents, vitamins, minerals, caffeine, drugs, potentiators, mouth moisteners, food acids and other actives.

### Methods of Preparing and Using Chewing Gum Compositions

Embodiments described herein also relate to methods of preparing chewing gum compositions and products, which provide a creamy and/or juicy perception upon consumption. For instance, in some embodiments, a chewing gum composition containing sufficient fat to provide a velvety chew score of at least about 2.0 on a scale of 0 to 4 as measured by descriptive analysis and a surface smoothness score of at least about 2.0 on a scale of 0 to 4 as measured by descriptive analysis is prepared. The chewing gum compositions and products may be prepared using standard techniques and equipment known to those skilled in the art. The apparatus useful in accordance with the embodiments described herein includes mixing and heating apparatus well known in the chewing gum manufacturing arts, and therefore the selection of the specific apparatus will be apparent to the artisan. For general chewing gum preparation processes see U.S. Patent Nos. 4,271,197 to Hopkins et al, 4,352,822 to Cherukuri et al and 4,497,832 to Cherukuri et al.

In accordance with some embodiments, a gum base composition first is provided. The gum base composition, as described in detail above, may include at least one elastomer, at least one gum resin or ester thereof and at least one fat having a melting point of from 15°C to 60°C. In some embodiments, the gum base may be admixed with additional chewing gum components, such as at least one flavor and at least one sweetener, to form a chewing gum composition. Any of the other optional components described above also may be admixed with the gum base to form the final chewing gum composition.

In some embodiments, a continuous gum making process may be used. In accordance therewith, a blend of at least one elastomer, at least one gum resin or ester thereof and at least one fat having a melting point of from 15°C to 60°C may be formed. The blend then may be admixed in-line with additional chewing gum components, such as at least one flavor and at least one sweetener. Any of the other optional components described above also may be admixed with the gum base to form the final chewing gum composition. Continuous gum making processes are more fully described in U.S. Patent Nos. 6,858,237, 6,440,472, 6,017,565 and 5,543,160.

Once the chewing gum composition is prepared, individual chewing gum pieces may be formed using standard techniques known in the chewing gum art. Chewing gum pieces may be prepared in any shape, such as a slab, pellet, stick, center-fill gum, deposited, compressed chewing gum or any other suitable format.

For instance, center-fill chewing gum embodiments may include a center-fill region, which may be a liquid or powder or other solid, and a gum region. Some embodiments also may include an outer gum coating or shell, which typically provides a crunchiness to the piece when initially chewed. The outer coating or shell may at least partially surround the gum region. The gum base and/or chewing gum compositions described above may be employed in the gum region of the center-fill chewing gum. Center-fill chewing gums and methods of preparing same are more fully described in assignee's co-pending U.S. Patent Application No. 10/925,822, filed on August 24, 2004 and assignee's co-pending U.S. Patent Application No. 11/210,954, filed on August 24, 2005, both entitled "Liquid-Filled Chewing Gum Composition".

In some embodiments, the chewing gum may have a coating thereon. Such coated chewing gums are typically referred to as pellet gums. The outer coating may be hard or crunchy. Any suitable coating material known to those skilled in the art may be employed. Typically, the outer coating may include sorbitol, maltitol, xylitol, isomalt, erythritol and other crystallizable polyols; sucrose may also be used. Furthermore the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include colored flakes or speckles. If the composition includes a coating, it is possible that one or more oral care actives can be dispersed throughout the coating. This is especially preferred if one or more oral care actives is incompatible in a single phase composition with another of the actives. Flavors may also be added to yield unique product characteristics.

Other materials may be added to the coating to achieve desired properties. These materials may include without limitations, cellulosics such as carboxymethyl cellulose, gelatin, xanthan gum and gum arabic.

The coating composition may be applied by any method known in the art including the method described above. The coating composition may be present in an amount from 2% to 60%, more specifically from 25% to 45% by weight of the total chewing gum piece.

Some embodiments described herein extend to methods of producing a chewing gum experience, which includes a creamy organoleptic perception. In accordance therewith, a chewing gum composition may be provided, which includes a gum base composition, as described above. More specifically, the gum base composition may include at least one elastomer, at least one gum resin or ester thereof and at least one fat having a melting point of from 15°C to 60°C. The chewing gum composition also may include additional components, such as at least one flavor. The flavor may be a creamy flavor, such as, for example, chocolate or strawberry cream. The chewing gum composition may be chewed by an individual user to experience a creamy perception. More specifically, chewing the chewing grim composition for a period of at least 5 minutes may provide a creamy perception defined by a velvety chew score of at least on a scale of 0 to 4 as measured by descriptive analysis and a surface smoothness score of at least 2.0 on a scale of 0 to 4 as measured by descriptive analysis. In some embodiments, the chewing gum composition may contain sufficient fat to provide the perception of creaminess and maintain sufficient fat to retain cohesive integrity during mastication.

Some other embodiments described herein extend to methods of producing a chewing gum experience, which includes a juicy organoleptic perception. In accordance therewith, a chewing gum composition may be provided, which includes a gum base composition, as described above. The chewing gum composition may be chewed by an individual user to experience a juicy perception. In particular, chewing the chewing gum composition for a period of at least 5 minutes may impart a juicy perception defined by a moistness of bolus score of at least 2.0 on a scale of 0 to 4 as measured by descriptive analysis.

The features and advantages of the present invention are more fully shown by the following examples which are provided for purposes of illustration, and are not to be construed as limiting the invention in any way.

### EXAMPLES - not according to the invention

### Examples 1-6:

**Table 1: Gum Base Compositions**

| **Component** | **Weight %** | | | | | |
|---|---|---|---|---|---|---|
| | 1 | 2 | 3 | 4 | 5 | 6 |
| Styrene butadiene rubber | 27.80 | 27.80 | 27.80 | 27.80 | 27.80 | 27.80 |
| Resin ester | 25.00 | 25.00 | 4.00 | 15.00 | 4.00 | 4.00 |
| Polyvinyl acetate | 12.20 | 12.20 | 33.20 | 12.20 | 23.20 | 28.20 |
| Wax | 4.61 | 4.65 | 3.65 | 4.64 | 4.12 | 3.85 |
| Hydrogenated oil | 479 | 4.81 | 3.90 | 481 | 4.33 | 4.10 |
| Triacetin¹ | 1.65 | 1.65 | 4.48 | 1.65 | 3.13 | 3.81 |
| Lecithin | 1.72 | 1.64 | 1.64 | 164 | 1.64 | 1.64 |
| Glycerol Monostearate | 2 19 | 2.22 | 1.30 | 2.23 | 1.75 | 1.57 |
| Butylated hydroxytoluene | 0.03 | 0.03 | 0.03 | 0.03 | 0.03 | 0.03 |
| Talc | 20.00 | 20.00 | 20.00 | 30.00 | 30.00 | 25.00 |

| | | | | | | |
|---|---|---|---|---|---|---|
| ¹Glycerol triacetate | | | | | | |

Gum base compositions were prepared according to the formulations in Table I above.

The gum base compositions were prepared by heating and blending the components listed in Table 1. More specifically, the components listed in Table 1 for each composition were added to a mixer and heated to form a molten gum base.

A low melting point fat, such as, hydrogenated palm oil, may be added to each of the gum base compositions set forth in Table 1. In particular, up to 40% by weight low melting point fat may be added. Alternatively, a low melting point fat may be substituted for a portion or all of the traditional plasticizing components in the gum base compositions set forth in Table 1, i.e.. the wax, hydrogenated oil (high melting fat having a melting point of 78°C), and/or triacetin.

The gum base compositions set forth in Table 1 may be incorporated into chewing gum compositions, as described in the examples below. Such chewing gum compositions may include a low melting point fat.

### Examples 7-26:

**Table 2: Chewing Gum Compositions**

| **Component** | **Weight %** | | | | | | | | | |
|---|---|---|---|---|---|---|---|---|---|---|
| | 7 | 8 | 9 | 10 | 11 | 12 | 13 | 14 | 15 | 16 |
| Gum base | 60.00 (Ex. 1) | 60.00 (Ex.1) | 60.00 (Ex.2) | 60.00 (Ex.2) | 75.00 (Ex.3) | 60.00 (Ex.3) | 75.00 (Ex.3) | 60.00 (Ex.3) | 75.00 (Ex.4) | 60.00 (Ex. 4) |
| Sorbitol | 20.00 | 5.00 | 20.00 | 5.00 | 5.00 | 20.00 | 5.00 | 5.00 | 5.00 | 20.00 |
| Hydrogenated palm oil | 15.00 | 30.00 | 15.00 | 30.00 | 15.00 | 15.00 | 15.00 | 30.00 | 15.00 | 15.00 |
| Aspartame | 0.40 | 0.40 | 0.40 | 0.40 | 0.40 | 0.40 | 0.40 | 0.40 | 0.40 | 0.40 |
| Acesulfame potassium | 0.20 | 0.20 | 0.20 | 0.20 | 0.20 | 0.20 | 0.20 | 0.20 | 0.20 | 0.20 |
| Encapsulated aspartame | 1.635 | 1.635 | 1.635 | 1.635 | 1.635 | 1.635 | 1.635 | 1.635 | 1.635 | 1.635 |
| Encapsulated acesulfame potassium | 0.765 | 0.765 | 0.765 | 0.765 | 0.765 | 0.765 | 0.765 | 0.765 | 0.765 | 0.765 |
| Strawberry cream flavor | 2.00 | 2.00 | 2.00 | 2.00 | 2.00 | 2.00 | 2.00 | 2.00 | 2.00 | 2.00 |

**Table 3: Chewing Gum Compositions**

| **Component** | **Weight %** | | | | | | | | | |
|---|---|---|---|---|---|---|---|---|---|---|
| | 17 | 18 | 19 | 20 | 21 | 22 | 23 | 24 | 25 | 26 |
| Gum base | 60.00 (Ex.4) | 75.00 (Ex.4) | 50.00 (Ex. 4) | 60.00 (Ex.5) | 60.00 (Ex.5) | 75.00 (Ex.6) | 60.00 (Ex.6) | 65.00 (Ex.6) | 65.00 (Ex.6) | 65.00 (Ex.6) |
| Sorbitol (crystalline) | 5.00 | 5.00 | 20.00 | 20.00 | 5.00 | 5.00 | 5.00 | 10.00 | 10.00 | 10.00 |
| Hydrogenated palm oil | 30.00 | 15.00 | 15.00 | 15.00 | 30.00 | 15.00 | 30.00 | 20.00 | 20.00 | 20.00 |
| Aspartame | 0.40 | 0.40 | 0.40 | 0.40 | 0.40 | 0.40 | 0.40 | 0.40 | 0.40 | 0.40 |
| Acesulfame potassium | 0.20 | 0.20 | 0.20 | 0.20 | 0.20 | 0.20 | 0.20 | 0.20 | 0.20 | 0.20 |
| Encapsulated aspartame | 1.635 | 1.635 | 1.635 | 1.635 | 1.635 | 1.635 | 1.635 | 1.635 | 1.635 | 1.635 |
| Encapsulated acesulfame potassium | 0.765 | 0.765 | 0.765 | 0.765 | 0.765 | 0.765 | 0.765 | 0.765 | 0.765 | 0.765 |
| Strawberry cream flavor | 2.0 | 2.00 | 2.00 | 2.00 | 2.00 | 2.00 | 2.00 | 2.00 | 2.00 | 2.00 |

Chewing gum compositions were prepared according to the formulations in Tables 2 and above.

The chewing gum compositions were prepared by first melting the gum base composition for each example at a temperature of 65.5-79.4°C (150-175°F). Once melted and placed in a standard mixer, the remaining components provided in Tables 2 and 3 for each example were added and thoroughly mixed for 1 to 20 minutes. The resulting mix was formed into the desired final shape using a laboratory-size extruder, rolled and cut into slabs, and then optionally coated.

The chewing gum compositions of Examples 7-26 were tested by a fully-trained descriptive analysis panel using the Spectrum^{™} method. The panel developed and measured the following characteristics: velvety chew; surface smoothness; mouth nim/coat perception; moistness of bolus (mass); ease to chew; and wall integrity. Each of these characteristics, except wall integrity, were measured on a five-point scale of 0-4 in accordance witch the following. Wall integrity was measured on a four-point scale of 0-3.

For velvety chew, 0 was not velvety, was slightly velvety, 2 was slight to moderately velvety, 3 was moderately velvety and 4 was very velvety.

For surface smoothness, 0 was not smooth, 1 was slightly smooth, 2 was slight to moderately smooth, 3 was moderately smooth and 4 was very smooth.

For mouth film/coat perception, 0 was no mouth film/coat perception, was slight perception, 2 was slight to moderate perception, 3 was moderate mouth film/coat perception and 4 was very mouth filmy/coat perception.

For moistness of bolus, 0 was bolus not perceived as moist, 1 was slight moistness, 2 was slight to moderate moistness, 3 was moderately moist and 4 was very moist bolus perception.

For case to chew, 0 was not easy to chew, 1 was slightly easy to chew, 2 was slight to moderately easy to chew, 3 was moderately easy to chew and 4 was very easy to chew.

For wall integrity, 0 was wall too thin or too tough to put tongue through, 1 was can put tongue through, but wall is too thin or separates apart in strings, 2 was gum can be manipulated into a wall and stays firmly together and 3 was can blow air into wall, as though preparing to blow a bubble.

All of the characteristics were scored at I minute, 3 minutes, 5 minutes and 7 minutes. All of the characteristics except moistness of bolus and wall integrity were also scored at 30 seconds. For data collection, the samples were coded and randomly presented to the panelists. Each panelist completed two repetitions of each sample. The raw data was statistically analyzed and the average scores for each of the six characteristics tested are provided in Tables 4-9 below.

**Table 4: Velvety Chew**

| **Ex. #** | **30 s** | **1 min** | **3 min** | **5 min** | **7 min** |
|---|---|---|---|---|---|
| 7 | 0.5 | 1 | 1.5 | 2 | 2.2 |
| 8 | 0.5 | 0.8 | 1.5 | 2.2 | 3 |
| 9 | 0 | 0.5 | 1 | 1.5 | 2 |
| 10 | 1.5 | 2.2 | 2.8 | 3.2 | 3.3 |
| 11 | 0 | 0 | 0.5 | 0.5 | 0.8 |
| 12 | 0.3 | 0.5 | 0.7 | 0.8 | 0.8 |
| 13 | 0 | 0.2 | 0.7 | 1 | 1.5 |
| 14 | 1.8 | 2.2 | 2.7 | 3.2 | 3.5 |
| 15 | 0.9 | 1.2 | 1.5 | 1.7 | 1.8 |
| 16 | 1.5 | 1.8 | 2.2 | 2.3 | 2.5 |
| 17 | 1 | 1.5 | 2 | 2.5 | 2.5 |
| 18 | 0 | 0.5 | 0.7 | 0.5 | 0.5 |
| 19 | 0.5 | 0.5 | 0.5 | 1 | 1 |
| 20 | 0 | 0 | 0 | 0.5 | 0.5 |
| 21 | 0.5 | 1.1 | 1.8 | 2.3 | 2.5 |
| 22 | 0.5 | 0 | 0 | 0 | 0 |
| 23 | 0.7 | 1 | 1.5 | 1.9 | 2.2 |
| 24 | 1 | 1.5 | 1.5 | 2.2 | 2.5 |
| 25 | 1.4 | 1.5 | 1.8 | 2.3 | 2.6 |
| 26 | 0.5 | 1 | 1.5 | 2 | 2 |

**Table 5: Surface Smoothness**

| **Ex. #** | **30 s** | **1 min** | **3 min** | **5 min** | **7 min** |
|---|---|---|---|---|---|
| 7 | 0.7 | 1.5 | 2.3 | 2.5 | 3 |
| 8 | 1 | 1.5 | 2.5 | 3.5 | 4 |
| 9 | 0 | 1.5 | 2.7 | 3 | 3 |
| 10 | 1.7 | 2 | 2.7 | 3.5 | 4 |
| 11 | 0 | 0.5 | 1 | 1 | 1.5 |
| 12 | 0 | 0.5 | 1 | 1.5 | 2 |
| 13 | 0 | 0.5 | 1 | 1.5 | 2 |
| 14 | 0.5 | 1.3 | 2 | 3 | 3.5 |
| 15 | 0.5 | 1.5 | 2 | 2 | 2.3 |
| 16 | 1 | 1.8 | 2.3 | 2.7 | 2.7 |
| 17 | 1 | 2 | 2.2 | 2.7 | 3 |
| 18 | 0 | 0.5 | 1 | 1 | 1.2 |
| 19 | 0.5 | 1 | 1.5 | 2 | 2 |
| 20 | 0 | 1 | 1.5 | 2 | 2.5 |
| 21 | 1 | 1.5 | 3 | 3.5 | 3.7 |
| 22 | 0.5 | 0.5 | 1.5 | 1.5 | 1.5 |
| 23 | 1.5 | 2.5 | 3 | 3.5 | 3.5 |
| 24 | 1.3 | 2 | 2.5 | 2.8 | 3 |
| 25 | 1 | 1.3 | 2 | 2.7 | 3 |
| 26 | 0.4 | 2 | 2.5 | 3 | 3 |

**Table 6: Mouth Film/Coat Perception**

| **Ex. #** | **30 s** | **1 min** | **3 min** | **5 min** | **7 min** |
|---|---|---|---|---|---|
| 7 | 0.5 | 1 | 1.5 | 1.7 | 2 |
| 8 | 0.5 | 1 | 1.5 | 2 | 2.5 |
| 9 | 0.5 | 0.8 | 1 | 1.5 | 1.7 |
| 10 | 1 | 1.4 | 1.8 | 2.2 | 2.3 |
| 11 | 0 | 0 | 0.5 | 0.5 | 0.5 |
| 12 | 0.3 | 0.5 | 0.5 | 0.7 | 0.7 |
| 13 | 0 | 0.5 | 0.9 | 1 | 1.2 |
| 14 | 1.3 | 2 | 2.5 | 3 | 3.5 |
| 15 | 0.7 | 1 | 1 | 1 | 1.2 |
| 16 | 1 | 1.5 | 1.6 | 1.7 | 1.9 |
| 17 | 1 | 1.5 | 1.7 | 2.2 | 2.2 |
| 18 | 0 | 0.5 | 0.8 | 0.8 | 0.8 |
| 19 | 0 | 0.5 | 0.5 | 1 | 1 |
| 20 | 0 | 0.7 | 1 | 1.2 | 1.5 |
| 21 | 0.3 | 1 | 1.5 | 2 | 2 |
| 22 | 0.5 | 1 | 1.2 | 1.2 | 1.2 |
| 23 | 0.5 | 1 | 1.5 | 1.6 | 1.9 |
| 24 | 0.5 | 0.8 | 1.3 | 1.7 | 2 |
| 25 | 0.8 | 1 | 1.3 | 1.5 | 1.7 |
| 26 | 0.2 | 0.6 | 1 | 1.5 | 1.8 |

**Table 7: Moistness of Bolus**

| **Ex. #** | **1 min** | **3 min** | **5 min** | **7 min** |
|---|---|---|---|---|
| 7 | 2 | 2.3 | 2.5 | 2.8 |
| 8 | 2 | 3 | 3 | 3.8 |
| 9 | 1.5 | 2.5 | 2.5 | 2.5 |
| 10 | 2 | 2.5 | 2.7 | 3 |
| 11 | 0.5 | 0.8 | 1 | 1.2 |
| 12 | 0.8 | 1.5 | 1 | 1.5 |
| 13 | 1 | 1 | 1.5 | 1.5 |
| 14 | 1.5 | 2 | 2.5 | 2.5 |
| 15 | 1.5 | 1.5 | 2 | 2 |
| 16 | 1.7 | 2 | 2 | 2.3 |
| 17 | 1.5 | 2.5 | 3 | 3 |
| 18 | 1 | 1.5 | 1 | 1.5 |
| 19 | 1 | 1 | 1.2 | 1.5 |
| 20 | 1 | 1.2 | 1.5 | 2 |
| 21 | 1.5 | 2.5 | 3 | 3.5 |
| 22 | 0.5 | 1.5 | 1.5 | 1.5 |
| 23 | 2 | 2.5 | 2.5 | 2.7 |
| 24 | 1 | 2 | 2 | 2 |
| 25 | 1.5 | 2 | 2.5 | 2.5 |
| 26 | 1 | 1.5 | 1.8 | 2 |

**Table 8: Ease to Chew**

| **Ex. #** | **30 s** | **1 min** | **3 min** | **5 min** | **7 min** |
|---|---|---|---|---|---|
| 7 | 2 | 2.3 | 2.5 | 2.5 | 3 |
| 8 | 1.5 | 2 | 2.5 | 2.5 | 2.5 |
| 9 | 1.8 | 2.5 | 3 | 3 | 3.4 |
| 10 | 2 | 3 | 3.2 | 3.3 | 3 |
| 11 | 0.5 | 0 | 0 | 1 | 1 |
| 12 | 1.5 | 1 | 0.5 | 0.5 | 0.5 |
| 13 | 1 | 0.5 | 0.8 | 1.3 | 1.8 |
| 14 | 3 | 3 | 3.5 | 3.8 | 3.8 |
| 15 | 2 | 2.5 | 2 | 2.5 | 2.8 |
| 16 | 2.5 | 2.8 | 3 | 3 | 3 |
| 17 | 2.8 | 3 | 3 | 3.2 | 3.2 |
| 18 | 1 | 1 | 2 | 1.5 | 1.5 |
| 19 | 1 | 2 | 2 | 2 | 2.5 |
| 20 | 2 | 1.5 | 1 | 1 | 1 |
| 21 | 3.5 | 4 | 3.5 | 3 | 3 |
| 22 | 05 | 0.5 | 1 | 1 | 1 |
| 23 | 3 | 3 | 3 | 3 | 3 |
| 24 | 2.5 | 2.5 | 2.3 | 2.5 | 2.5 |
| 25 | 1.8 | 2 | 2.3 | 2.7 | 2.8 |
| 26 | 2 | 1.7 | 2 | 2.3 | 2.5 |

**Table 9: Wall Integrity**

| **Ex. #** | **1 min** | **3 min** | **5 min** | **7 min** |
|---|---|---|---|---|
| 7 | 1 | 1 | 1 | 2.3 |
| 8 | 0.7 | 1.5 | 1.5 | 2 |
| 9 | 1.5 | 2 | 2 | 2.3 |
| 10 | 1 | 1.5 | 2 | 2.5 |
| 11 | 0 | 0 | 0 | 0.5 |
| 12 | 0 | 0 | 0 | 0.5 |
| 13 | 0 | 0.5 | 1.5 | 2 |
| 14 | 3 | 3 | 3 | 3 |
| 15 | 2.5 | 2.8 | 3 | 3 |
| 16 | 1 | 1.5 | 2.7 | 2.7 |
| 17 | 0.5 | 1 | 1.5 | 2 |
| 18 | 0 | 0.5 | 1 | 1.5 |
| 19 | 0 | 0.5 | 0.5 | 2 |
| 20 | 0 | 0.5 | 1 | 1.5 |
| 21 | 1 | 2.5 | 3 | 3 |
| 22 | 0 | 0 | 0 | 0 |
| 23 | 3 | 3 | 3 | 3 |
| 24 | 2.5 | 3 | 3 | 3 |
| 25 | 2.7 | 3 | 3 | 3 |
| 26 | 2.5 | 2.5 | 2.8 | 3 |

### Examples 27-39:

**Table 10: Gum Base Compositions**

| **Component** | **Weight %** | | | | |
|---|---|---|---|---|---|
| | 27 | 28 | 29 | 30 | 31 |
| Styrene butadiene rubber | 27.80 | 27.80 | 27.80 | 27.80 | 27.80 |
| Resin ester | 25.00 | 4.00 | 15.00 | 4.00 | 4.00 |
| Polyvinyl acetate | 12.20 | 33.20 | 12.20 | 23.20 | 28.20 |
| Wax | 4.53 | 4.53 | 4.53 | 4.53 | 4.53 |
| Hydrogenated oil | 4.71 | 4.71 | 4.71 | 4.71 | 4.71 |
| Triacetin¹ | 1.98 | 1.98 | 1.98 | 1.98 | 1.98 |
| Lecithin | 1.64 | 1.64 | 1.64 | 1.64 | 1.64 |
| Glycerol Monostearate | 2.11 | 2.11 | 2.11 | 2.11 | 2.11 |
| Butylated hydroxytoluene | 0.02 | 0.02 | 0.02 | 0.02 | 0.02 |
| Talc | 20.00 | 20.00 | 30.00 | 30.00 | 25.00 |

**Table 11: Gum Base Compositions**

| **Component** | **Weight %** | | | | | | | |
|---|---|---|---|---|---|---|---|---|
| | 32 | 33 | 34 | 35 | 36 | 37 | 38 | 39 |
| Butyl rubber | 10.00 | 10.00 | 10.00 | 10.00 | 10.00 | 10.00 | 10.00 | 10.00 |
| Polyisobutylene | 17.80 | 17.80 | 17.80 | 17.80 | 17.80 | 17.80 | 17.80 | 17.80 |
| Resin ester | 25.00 | 4.00 | 15.00 | 4.00 | 4.00 | 20.00 | 14.50 | 12.00 |
| Polyvinyl acetate | 12.20 | 33.20 | 12.20 | 23.20 | 28.20 | 12.20 | 22.70 | 20.20 |
| Wax | 4.53 | 4.53 | 4.53 | 4.53 | 4.53 | 4.53 | 4.53 | 4.53 |
| Hydrogenated oil | 4.71 | 4.71 | 4.71 | 4.71 | 4.71 | 4.71 | 4.71 | 4.71 |
| Triacetin¹ | 1.98 | 1.98 | 1.98 | 1.98 | 1.78 | 1.98 | 1.98 | 1.98 |
| Lecithin | 1.64 | 1.64 | 1.64 | 1.64 | 1.64 | 1.64 | 1.64 | 1.64 |
| Glycerol Monostearate | 2.11 | 2.11 | 2.11 | 2.11 | 2.11 | 2.11 | 2.11 | 2.11 |
| Butylated hydroxytoluene | 0.02 | 0.02 | 0.02 | 0.02 | 0.02 | 0.02 | 002 | 0.02 |
| Talc | 20.00 | 20.00 | 3000 | 30.00 | 25.00 | 25.00 | 20.00 | 25.00 |

| | | | | | | | | |
|---|---|---|---|---|---|---|---|---|
| ¹ Glycerol triacetate | | | | | | | | |

Gum base compositions are prepared according to the formulations in Tables 10 and 11 above.

The gum base compositions are prepared by heating and blending the component listed in Tables 10 and 11. More specifically, the components listed in Tables 10 and 11 for each composition are added to a mixer and heated to form a molten gum base.

A low melting point fat, such as, hydrogenated palm oil, may be added to each od the gum base compositions set forth in Tables 10 and 11. In particular, up to 40% by weight low melting point fat may be added. Alternatively, a low melting point fat may be substitued for a portion or all of the traditional plasticizing components in the gum base compositions set forth in Tables 10 and 11, i.e., the wax, hydrogenated oil (high melting fat having a melting point of 78°C), and/or triacetin.

The gum base compositions set forth in Tables 10 and 11 may be incorporated into chewing gum compositions, as described in the examples below. Such chewing gum compositions may include a low melting point fat.

### Examples 40-44:

**Table 12: Chewing Gum Compositions**

| **Component** | **Weight %** | | | | |
|---|---|---|---|---|---|
| | 40 | 41 | 42 | 43 | 44 |
| Gum base | 60.00 | 60.00 | 75.00 | 60.00 | 65.00 |
| Sorbitol (crystalline) | 20.00 | 5.00 | 5.00 | 15.00 | 10.00 |
| Hydrogenated palm oil | 15.00 | 30.00 | 15.00 | 20.00 | 20.00 |
| Aspartame | 0.40 | 0.40 | 0.40 | 0.40 | 0.40 |
| Acesulfame potassium | 0.20 | 0.20 | 0.20 | 0.20 | 0.20 |
| Encapsulated acesulfame potassium | 0.7650 | 0.7650 | 0.7650 | 0.7650 | 0.7650 |
| Encapsulated aspartame | 1.6350 | 1.6350 | 1.6350 | 1.6350 | 1.6350 |
| Strawberry cream flavor | 2.00 | 2.00 | 2.00 | 2.00 | 2.00 |

Chewing gum compositions are prepared according to the formulations in Table 12 above. The chewing gum compositions of Examples 40-44 may incorporate any of the gum base compositions from Examples 27-39 provided in Tables 10 and 11 above.

The chewing gum compositions are prepared by first melting the gum base composition for each example at a temperature 65.5-79.4°C (150-175°F). Once melted and placed in a standard mixer, the remaining components provided in Table 12 for each example are added and thoroughly mixed for 1 to 20 minutes. The resulting mix is formed into the desired final shape using a laboratoy-size extruder, rolled and cut into slabs, and then optionally coated.

## Claims

1. A chewing gum composition comprising:
(a) a gum base composition comprising:
(i) at least one elastomer;
(ii) at least one gum resin or ester thereof present in amounts of at least 10% by weight of said gum base composition; and
(iii) at least one fat having a melting point from 15°C to 60°C present in amounts of 20% to 50% by weight of said gum base composition;
(b) at least one flavor; and
(c) at least one sweetener,
wherein the gum base constitutes from 60.00% to 90% by weight of the chewing gum composition.

2. A chewing gum composition comprising:
a gum base composition comprising:
(i) at least one elastomer;
(ii) at least one gum resin or ester thereof present in amounts of at least about 10% by weight of said gum base composition; and
(iii) at least one fat having a melting point from 15°C to 60°C;
wherein upon mastication for a period of at least 5 minutes, said chewing gum composition containing from 20% to 50% of the fat by weight of the chewing gum and providing a velvety chew score of at least 2.0 on a scale of 0 to 4 as measured by descriptive analysis and a surface smoothness score of at least 2.0 on a scale of 0 to 4 as measured by descriptive analysis.

3. The composition of claim 2, wherein upon mastication for a period of at least 5 minutes, said chewing gum composition retains cohesive integrity as measured by a wall integrity score of at least 1.5 on a scale of 0 to 3 as measured by descriptive analysis,

4. The composition of claim 2 or claim 3, wherein upon mastication for a period of at least 5 minutes, said chewing gum provides a score of at least 2.0 on a scale of 0 to 4 as measured by descriptive analysis selected from the group consisting of mouth film, moistness of bolus, ease to chew, and combinations thereof.

5. The composition of any of claims 2-4, wherein said fat having a melting point range of 15°C to 60°C is present in amounts of 5% to 40% by weight of said chewing gum composition.

6. The composition of any preceding claim, wherein said gum base composition is present in amounts of 75% to 90% by weight of said chewing gum composition.

7. The composition of any preceding claim, wherein said gum resin or ester thereof is present in amounts of 10% to 30% by weight of said gum base composition or wherein said at least one elastomer is present in amounts of 20% to 40% by weight of said gum base composition or wherein said gum base composition further comprises at least one filler present in amounts of 30% to 75% by weight of said gum base composition.

8. The composition of any preceding claim, further comprising polyvinyl acetate having a molecular weight of 10,000 g/mol to 60,000 g/mol or wherein said polyvinyl acetate comprises a combination of polyvinyl acetate having a molecular weight of 10,000 g/mol to 15,000 g/mol and polyvinyl acetate having a molecular weight of 80,000 g/mol to 100,000 g/mol.

9. The composition of any preceding claim, wherein said elastomer contains one or more polar groups.

10. The composition of any preceding claim, wherein said at least one flavor comprises a flavor emulsion or wherein at least a portion of said at least one flavor is premixed with said fat or wherein at least a portion of said at least one flavor is encapsulated or wherein said at least one flavor comprises an indulgent flavor selected from the group consisting of maple, cola, chocolate, dulce de leche, raisin, vanilla, caramel, cream, butter, milk, yogurt, butterscotch, peanut butter, strawberry cream and combinations thereof.

11. The composition of any preceding claim, further comprising a layer of fat having a melting point from 15°C to 60°C on the surface of said gum base composition or further comprising a coating at least partially surrounding said chewing gum composition, said coating comprising at least one fat having a melting point from 15°C to 60°C.

12. The composition of any preceding claim, wherein the fat is selected from hydrogenated oils such as hydrogenated palm oil, hydrogenated or palm kernel oil hydrogenated cotton seed oil, cocoa fat, soy bean oil, peanut oil, cotton seed oil, sun flower seed oil, olive oil and a combination thereof.

13. A method of preparing a chewing gum composition containing sufficient fat to provide a velvety chew score of at least 2.0 on a scale of 0 to 4 as measured by descriptive analysis and a surface smoothness score of at least 2.0 on a scale of 0 to 4 as measured by descriptive analysis, comprising the steps of: (a) providing a gum base composition comprising: (i) at least one elastomer containing one or more polar groups; (ii) at least one gum resin or ester thereof present in amounts of at least 10% by weight of said gum base composition; and (iii) at least one fat having a melting point from 15°C to 60°C present in amounts of 20% to 50% by weight of said gum base composition, wherein said gum base composition is present in amounts of 60.00% to 90% by weight of said chewing gum composition; and (b) admixing the gum base composition with at least one flavor and at least one sweetener.

14. The method of claim 13, wherein step (a) comprises foaming a blend of the at least one elastomer, the at least one gum resin or ester thereof and the at least one fat; and wherein step (b) comprises admixing the blend in-line with the at least one flavor and the at least one sweetener.

15. A method of producing a chewing gum experience comprising a creamy organoleptic perception comprising the steps of: (a) providing a chewing gum composition comprising a chewing gum base and at least one flavor, said chewing gum base comprising a blend of: (i) at least one elastomer containing one or more polar groups; (ii) at least one gum resin or ester thereof present in amounts of at least 10% by weight of said gum base composition; and (iii) at least one fat having a melting point from 15°C to 60°C present in amounts of 20% to 50% by weight of said gum base composition, wherein said chewing gum base is present in amounts of 60.00% to 90% by weight of said chewing gum composition; and (b) chewing the chewing gum composition for a period of at least 5 minutes to experience a creamy perception defined by a velvety chew score of at least 2.0 on a scale of 0 to 4 as measured by descriptive analysis and a surface smoothness score of at least 2.0 on a scale of 0 to 4 as measured by descriptive analysis.

16. A method of producing a chewing gum experience comprising a juicy organoleptic perception comprising the steps of: (a) providing a chewing gum composition comprising a chewing gum base and at least one flavor, said chewing gum base comprising a blend of: (i) at least one elastomer containing one or more polar groups; (ii) at least one gum resin or ester thereof present in amounts of at least 10% by weight of said gum base composition; and (iii) at least one fat having a melting point from 15°C to 60°C present in amounts of 20% to 50% by weight of said gum base composition, wherein said chewing gum base is present in amounts of 60.00% to 90% by weight of said chewing gum composition; and (b) chewing the chewing gum composition for a period of at least 5 minutes to experience a juicy perception defined by a moistness of bolus score of at least 2.0 on a scale of 0 to 4 as measured by descriptive analysis.

## Patentansprüche

1. Kaugummizusammensetzung umfassend:
(a) eine Gummibasezusammensetzung umfassend:
(i) mindestens ein Elastomer,
(ii) mindestens ein Gummiharz oder einen Ester desselben, das oder der in einer Menge von mindestens 10 Gew.% der Gummibasezusammensetzung vorhanden ist, und
(iii) mindestens ein Fett mit einem Schmelzpunkt von 15°C bis 60°C, das in einer Menge von 20 Gew.% bis 50 Gew.% der Gummibasezusammensetzung vorhanden ist,
(b) mindestens einen Aromastoff, und
(c) mindestens einen Süßstoff,
wobei die Gummibase von 60,00 Gew.% bis 90 Gew.% der Kaugummizusammensetzung ausmacht.

2. Kaugummizusammensetzung umfassend:
eine Gummibasezusammensetzung umfassend:
(i) mindestens ein Elastomer,
(ii) mindestens ein Gummiharz oder einen Ester desselben, das oder der in einer Menge von mindestens ungefähr 10 Gew.% der Gummibasezusammensetzung vorhanden ist, und
(iii) mindestens ein Fett mit einem Schmelzpunkt von 15°C bis 60°C, wobei beim Kauen für eine Dauer von mindestens 5 Minuten die Kaugummizusammensetzung, welche von 20 Gew.% bis 50 Gew.% des Kaugummis Fett enthält, einen samtigen Kauscorewert von mindestens 2,0 auf einer Skala von 0 bis 4, gemessen anhand einer deskriptiven Analyse, und einen Oberflächenglätte-Scorewert von mindestens 2,0 auf einer Skala von 0 bis 4, gemessen anhand einer deskriptiven Analyse, bereitstellt.

3. Zusammensetzung nach Anspruch 2, wobei die Kaugummizusammensetzung beim Kauen für eine Dauer von mindestens 5 Minuten ihre kohäsive Integrität, gemessen anhand eines Wandintegritäts-Scorewerts von mindestens 1,5 auf einer Skala von 0 bis 3, gemessen anhand einer deskriptiven Analyse, beibehält.

4. Zusammensetzung nach Anspruch 2 oder Anspruch 3, wobei der Kaugummi beim Kauen für eine Dauer von mindestens 5 Minuten einen Scorewert von mindestens 2,0 auf einer Skala von 0 bis 4, gemessen anhand einer deskriptiven Analyse ausgewählt aus der Gruppe bestehend aus Mundfilm, Bolusfeuchte, Kaufkomfort und Kombinationen derselben, bereitstellt.

5. Zusammensetzung nach einem der Ansprüche 2 - 4, wobei das Fett mit einem Schmelzpunktbereich von 15°C bis 60°C in einer Menge von 5 Gew.% bis 40 Gew.% der Kaugummizusammensetzung vorhanden ist.

6. Zusammensetzung nach einem der vorstehenden Ansprüche, wobei die Gummibasezusammensetzung in einer Menge von 75 Gew.% bis 90 Gew.% der Kaugummizusammensetzung vorhanden ist.

7. Zusammensetzung nach einem der vorstehenden Ansprüche, wobei das Gummiharz oder der Ester desselben in einer Menge von 10 Gew.% bis 30 Gew.% der Gummibasezusammensetzung vorhanden ist oder wobei das mindestens eine Elastomer in einer Menge von 20 Gew.% bis 40 Gew.% der Gummibasezusammensetzung vorhanden ist oder wobei die Gummibasezusammensetzung darüber hinaus mindestens einen Füllstoff umfasst, der in einer Menge von 30 Gew.% bis 75 Gew.% der Gummibasezusammensetzung vorhanden ist.

8. Zusammensetzung nach einem der vorstehenden Ansprüche, darüber hinaus Polyvinylacetat mit einem Molekulargewicht von 10.000 g/mol bis 60.000 g/mol umfassend oder wobei das Polyvinylacetat eine Kombination aus Polyvinylacetat mit einem Molekulargewicht von 10.000 g/mol bis 15.000 g/mol und Polyvinylacetat mit einem Molekulargewicht von 80.000 g/mol bis 100.000 g/mol umfasst.

9. Zusammensetzung nach einem der vorstehenden Ansprüche, wobei das Elastomer eine oder mehrere polare Gruppe(n) enthält.

10. Zusammensetzung nach einem der vorstehenden Ansprüche, wobei der mindestens eine Aromastoff eine Aromastoffemulsion umfasst oder wobei mindestens ein Teil des mindestens einen Aromastoffs mit dem Fett vorgemischt wird oder wobei mindestens ein Teil des mindestens einen Aromastoffs eingekapselt ist oder wobei der mindestens eine Aromastoff einen verwöhnenden Aromastoff umfasst, der aus der Gruppe ausgewählt ist, die aus Ahorn, Cola, Schokolade, Dulce de Leche, Rosine, Vanille, Karamell, Sahne, Butter, Milch, Joghurt, Butterbonbon, Erdnussbutter, Erdbeersahne und Kombinationen derselben besteht.

11. Zusammensetzung nach einem der vorstehenden Ansprüche, darüber hinaus umfassend eine Schicht Fett mit einem Schmelzpunkt von 15°C bis 60°C auf der Oberfläche der Gummibasezusammensetzung oder darüber hinaus umfassend einen Überzug, der die Kaugummizusammensetzung zumindest teilweise umgibt, wobei der Überzug mindestens ein Fett mit einem Schmelzpunkt von 15°C bis 60°C umfasst.

12. Zusammensetzung nach einem der vorstehenden Ansprüche, wobei das Fett aus hydrierten Ölen, wie hydriertem Palmöl, hydriertem Palmkernöl, hydriertem Baumwollsamenöl, Kakaofett, Sojabohnenöl, Erdnussöl, Baumwollsamenöl, Sonnenblumensamenöl, Olivenöl und einer Kombination derselben, ausgewählt ist.

13. Verfahren zur Herstellung einer Kaugummizusammensetzung, die genügend Fett enthält, um einen samtigen Kauscorewert von mindestens 2,0 auf einer Skala von 0 bis 4, gemessen anhand einer deskriptiven Analyse, und einen Oberflächenglätte-Scorewert von mindestens 2,0 auf einer Skala von 0 bis 4, gemessen anhand einer deskriptiven Analyse, bereitzustellen, umfassend die Schritte: (a) Bereitstellen einer Gummibasezusammensetzung umfassend: (i) mindestens ein Elastomer, das eine oder mehrere polare Gruppen enthält, (ii) mindestens ein Gummiharz oder einen Ester desselben, das oder der in einer Menge von mindestens 10 Gew.% der Gummibasezusammensetzung vorhanden ist, und (iii) mindestens ein Fett mit einem Schmelzpunkt von 15°C bis 60°C, das in einer Menge von 20 Gew.% bis 50 Gew.% der Gummibasezusammensetzung vorhanden ist, wobei die Gummibasezusammensetzung in einer Menge von 60,00 Gew.% bis 90 Gew.% der Kaugummizusammensetzung vorhanden ist, und (b) Zusammenmischen der Gummibasezusammensetzung mit mindestens einem Aromastoff und mindestens einem Süßstoff.

14. Verfahren nach Anspruch 13, wobei Schritt (a) darüber hinaus das Bilden eines Gemisches aus dem mindestens einen Elastomer, dem mindestens einen Gummiharz oder dem Ester desselben und dem mindestens einen Fett umfasst, und wobei Schritt (b) das In-Line-Zusammenmischen des Gemisches mit dem mindestens einen Aromastoff und dem mindestens einen Süßstoff umfasst.

15. Verfahren zur Erzeugung eines Kaugummierlebnisses, das eine sahnige organoleptische Wahrnehmung umfasst, umfassend die Schritte: (a) Bereitstellen einer Kaugummizusammensetzung umfassend eine Kaugummibase und mindestens einen Aromastoff, wobei die Kaugummibase ein Gemisch umfasst aus: (i) mindestens einem Elastomer, das eine oder mehrere polare Gruppen enthält, (ii) mindestens einem Gummiharz oder einem Ester desselben, das oder der in einer Menge von mindestens 10 Gew.% der Gummibasezusammensetzung vorhanden ist, und (iii) mindestens einem Fett mit einem Schmelzpunkt von 15°C bis 60°C, das in einer Menge von 20 Gew.% bis 50 Gew.% der Gummibasezusammensetzung vorhanden ist, wobei die Kaugummibasezusammensetzung in einer Menge von 60,00 Gew.% bis 90 Gew.% der Kaugummizusammensetzung vorhanden ist, und (b) Kauen der Kaugummizusammensetzung für eine Dauer von mindestens 5 Minuten, um eine sahnige Empfindung wahrzunehmen, die durch einen samtigen Kauscorewert von mindestens 2,0 auf einer Skala von 0 bis 4, gemessen anhand einer deskriptiven Analyse, und einen Oberflächenglätte-Scorewert von mindestens 2,0 auf einer Skala von 0 bis 4, gemessen anhand einer deskriptiven Analyse, definiert ist.

16. Verfahren zur Erzeugung eines Kaugummierlebnisses, das eine saftige organoleptische Wahrnehmung umfasst, umfassend die Schritte: (a) Bereitstellen einer Kaugummizusammensetzung umfassend eine Kaugummibase und mindestens einen Aromastoff, wobei die Kaugummibase ein Gemisch umfasst aus: (i) mindestens einem Elastomer, das eine oder mehrere polare Gruppen enthält, (ii) mindestens einem Gummiharz oder einem Ester desselben, das oder der in einer Menge von mindestens 10 Gew.% der Gummibasezusammensetzung vorhanden ist, und (iii) mindestens einem Fett mit einem Schmelzpunkt von 15°C bis 60°C, das in einer Menge von 20 Gew.% bis 50 Gew.% der Gummibasezusammensetzung vorhanden ist, wobei die Kaugummibase in einer Menge von 60,00 Gew.% bis 90 Gew.% der Kaugummizusammensetzung vorhanden ist, und (b) Kauen der Kaugummizusammensetzung für eine Dauer von mindestens 5 Minuten, um eine saftige Empfindung wahrzunehmen, die durch einen Bolusfeuchte-Scorewert von mindestens 2,0 auf einer Skala von 0 bis 4, gemessen anhand einer deskriptiven Analyse, definiert ist.

## Revendications

1. Composition de gomme à mâcher comprenant :
(a) une composition de base de gomme comprenant :
(i) au moins un élastomère ;
(ii) au moins une résine de gomme ou un ester de celle-ci présente en des quantités d'au moins 10 % en poids de ladite composition de base de gomme ; et
(iii) au moins une matière grasse ayant un point de fusion de 15 °C à 60 °C présente en des quantités de 20 % à 50 % en poids de ladite composition de base de gomme ;
(b) au moins un arôme ; et
(c) au moins un édulcorant,
dans laquelle la base de gomme constitue de 60,00 % à 90 % en poids de la composition de gomme à mâcher.

2. Composition de gomme à mâcher comprenant :
une composition de base de gomme comprenant :
(i) au moins un élastomère ;
(ii) au moins une résine de gomme ou un ester de celle-ci présente en des quantités d'au moins environ 10 % en poids de ladite composition de base de gomme ; et
(iii) au moins une matière grasse ayant un point de fusion de 15 °C à 60 °C ; dans laquelle après mastication pendant une durée d'au moins 5 minutes, ladite composition de gomme à mâcher contenant de 20 % à 50 % de la matière grasse en poids de la gomme à mâcher et présentant un score de mastication veloutée d'au moins 2,0 sur une échelle de 0 à 4 tel que mesuré par analyse descriptive, et un score de lissé de surface d'au moins 2,0 sur une échelle de 0 à 4 tel que mesuré par analyse descriptive.

3. Composition selon la revendication 2, où, après mastication pendant une durée d'au moins 5 minutes, ladite composition de gomme à mâcher conserve une intégrité cohésive telle que mesurée par un score d'intégrité de paroi d'au moins 1,5 sur une échelle de 0 à 3 tel que mesurée par analyse descriptive.

4. Composition selon la revendication 2 ou 3, où, après mastication pendant une durée d'au moins 5 minutes, ladite gomme à mâcher présente un score d'au moins 2,0 sur une échelle de 0 à 4 tel que mesuré par analyse descriptive choisi dans le groupe constitué de film buccal, humidité de bolus, facilité de mastication, et des combinaisons de ceux-ci.

5. Composition selon l'une quelconque des revendications 2 à 4, dans laquelle ladite matière grasse ayant une plage de point de fusion de 15 °C à 60 °C est présente en des quantités de 5 % à 40 % en poids de ladite composition de gomme à mâcher.

6. Composition selon l'une quelconque des revendications précédentes, dans laquelle ladite composition de base de gomme est présente en des quantités de 75 % à 90 % en poids de ladite composition de gomme à mâcher.

7. Composition selon l'une quelconque des revendications précédentes, dans laquelle ladite résine de gomme ou ester de celle-ci est présente en des quantités de 10 % à 30 % en poids de ladite composition de base de gomme ou dans laquelle ledit au moins un élastomère est présent en des quantités de 20 % à 40 % en poids de ladite composition de base de gomme ou dans laquelle ladite composition de base de gomme comprend en outre au moins une charge présente en des quantités de 30 % à 75 % en poids de ladite composition de base de gomme.

8. Composition selon l'une quelconque des revendications précédentes, comprenant en outre du polyacétate de vinyle ayant un poids moléculaire de 10 000 g/mole à 60 000 g/mole ou dans laquelle ledit polyacétate de vinyle comprend une combinaison de polyacétate de vinyle ayant un poids moléculaire de 10 000 g/mole à 15 000 g/mole et de polyacétate de vinyle ayant un poids moléculaire de 80 000 g/mole à 100 000 g/mole.

9. Composition selon l'une quelconque des revendications précédentes, dans laquelle ledit élastomère contient un ou plusieurs groupes polaires.

10. Composition selon l'une quelconque des revendications précédentes, dans laquelle ledit au moins un arôme comprend une émulsion d'arôme ou dans laquelle au moins une partie dudit au moins un arôme est prémélangée avec ladite matière grasse ou dans laquelle au moins une partie dudit au moins un arôme est encapsulée ou dans laquelle ledit au moins un arôme comprend un arôme indulgent choisi dans le groupe constitué d'érable, cola, chocolat, dulce de leche, raisin, vanille, caramel, crème, beurre, lait, yogourt, caramel écossais, beurre de cacahuètes, crème de fraise et des combinaisons de ceux-ci.

11. Composition selon l'une quelconque des revendications précédentes, comprenant en outre une couche de matière grasse ayant un point de fusion de 15 °C à 60 °C sur la surface de ladite composition de base de gomme ou comprenant en outre un enrobage entourant au moins partiellement ladite composition de gomme à mâcher, ledit enrobage comprenant au moins une matière grasse ayant un point de fusion de 15 °C à 60 °C.

12. Composition selon l'une quelconque des revendications précédentes, dans laquelle la matière grasse est choisie parmi des huiles hydrogénées telles que l'huile de palme hydrogénée, ou l'huile de palmiste hydrogénée, l'huile de coton hydrogénée, la graisse de cacao, l'huile de soja, l'huile d'arachide, l'huile de coton, l'huile de tournesol, l'huile d'olive et une combinaison de celles-ci.

13. Procédé de préparation d'une composition de gomme à mâcher contenant suffisamment de matière grasse pour présenter un score de mastication veloutée d'au moins 2,0 sur une échelle de 0 à 4 tel que mesuré par analyse descriptive et un score de lissé de surface d'au moins 2,0 sur une échelle de 0 à 4 tel que mesuré par analyse descriptive, comprenant les étapes de : (a) production d'une composition de base de gomme comprenant : (i) au moins un élastomère contenant un ou plusieurs groupes polaires ; (ii) au moins une résine de gomme ou un ester de celle-ci présente en des quantités d'au moins 10 % en poids de ladite composition de base de gomme ; et (iii) au moins une matière grasse ayant un point de fusion de 15 °C à 60 °C présente en des quantités de 20 % à 50 % en poids de ladite composition de base de gomme, ladite composition de base de gomme étant présente en des quantités de 60,00 % à 90 % en poids de ladite composition de gomme à mâcher ; et (b) mélange de la composition de base de gomme avec au moins un arôme et au moins un édulcorant.

14. Procédé selon la revendication 13, dans lequel l'étape (a) comprend la formation d'un mélange du le au moins un élastomère, la au moins une résine de gomme ou un ester de celle-ci et la au moins une matière grasse ; et dans lequel l'étape (b) comprend l'incorporation du mélange en ligne avec le au moins un arôme et le au moins un édulcorant.

15. Procédé de production d'une expérience de gomme à mâcher comprenant une perception organoleptique crémeuse comprenant les étapes de :
(a) production d'une composition de gomme à mâcher comprenant une base de gomme à mâcher et au moins un arôme, ladite base de gomme à mâcher comprenant un mélange de : (i) au moins un élastomère contenant un ou plusieurs groupes polaires ; (ii) au moins une résine de gomme ou un ester de celle-ci présente en des quantités d'au moins 10 % en poids de ladite composition de base de gomme ; et (iii) au moins une matière grasse ayant un point de fusion de 15 °C à 60 °C présente en des quantités de 20 % à 50 % en poids de ladite composition de base de gomme, ladite base de gomme à mâcher étant présente en des quantités de 60,00 % à 90 % en poids de ladite composition de gomme à mâcher ; et
(b) mastication de la composition de gomme à mâcher pendant une durée d'au moins 5 minutes pour produire une perception crémeuse définie par un score de mastication veloutée d'au moins 2,0 sur une échelle de 0 à 4 tel que mesuré par analyse descriptive et un score de lissé de surface d'au moins 2,0 sur une échelle de 0 à 4 tel que mesuré par analyse descriptive.

16. Procédé de production d'une expérience de gomme à mâcher comprenant une perception organoleptique juteuse comprenant les étapes de :
(a) production d'une composition de gomme à mâcher comprenant une base de gomme à mâcher et au moins un arôme, ladite base de gomme à mâcher comprenant un mélange de : (i) au moins un élastomère contenant un ou plusieurs groupes polaires ; (ii) au moins une résine de gomme ou un ester de celle-ci présente en des quantités d'au moins 10 % en poids de ladite composition de base de gomme ; et (iii) au moins une matière grasse ayant un point de fusion de 15 °C à 60 °C présente en des quantités de 20 % à 50 % en poids de ladite composition de base de gomme, ladite base de gomme à mâcher étant présente en des quantités de 60,00 % à 90 % en poids de ladite composition de gomme à mâcher ; et
(b) mastication de la composition de gomme à mâcher pendant une durée d'au moins 5 minutes pour produire une perception juteuse définie par un score d'humidité de bolus d'au moins 2,0 sur une échelle de 0 à 4 tel que mesuré par analyse descriptive.
